Europäisches Patentamt

European Patent Office

Office européen des brevets

(19)

(11) Numéro de publication : **0 402 229 B1**

(12)

# FASCICULE DE BREVET EUROPEEN

(45) Date de publication du fascicule du brevet :
**15.12.93 Bulletin 93/50**

(51) Int. Cl.⁵ : **B25J 15/02, B25J 13/08**

(21) Numéro de dépôt : **90401508.8**

(22) Date de dépôt : **05.06.90**

(54) **Systeme de préhension à piece commandée par un moteur asservi.**

(30) Priorité : **08.06.89 FR 8907597**

(43) Date de publication de la demande :
**12.12.90 Bulletin 90/50**

(45) Mention de la délivrance du brevet :
**15.12.93 Bulletin 93/50**

(84) Etats contractants désignés :
**CH DE ES GB IT LI NL SE**

(56) Documents cités :
**DE-A- 2 443 962
FR-A- 2 354 859
GB-A- 2 163 570
GB-A- 2 166 710
US-A- 3 370 213
US-A- 3 683 747
US-A- 3 843 187**

(56) Documents cités :
**US-A- 4 680 523
US-A- 4 715 773
US-A- 4 781 519
US-A- 4 783 107**

(73) Titulaire : **COMMISSARIAT A L'ENERGIE
ATOMIQUE
31/33, rue de la Fédération
F-75015 Paris Cédex 15 (FR)**

(72) Inventeur : **Sgarbi, Frédéric
6Bis, rue de l'Assomption
F-75016 Paris (FR)**
Inventeur : **Detriche, Jean-Marie
6 La Gaillarderie
F-78590 Noisy le Roi (FR)**

(74) Mandataire : **Mongrédien, André et al
c/o BREVATOME 25, rue de Ponthieu
F-75008 Paris (FR)**

EP 0 402 229 B1

Jouve, 18, rue Saint-Denis, 75001 PARIS

EP 0 402 229 B1

## Description

L'invention se rapporte à un système de préhension d'un objet, qui comprend essentiellement une pince actionnée par un moteur asservi.

On connaît deux modes d'asservissement : en position et en force. Dans le premier d'entre eux, des états de consigne des mâchoires de la pince à des positions déterminées sont commandés. Les mâchoires sont stabilisées lorsque les états de consigne sont atteints.

Si l'objet a été saisi avant d'atteindre un état de consigne, un serrage se produit dont il faut limiter l'ampleur. On utilise pour cela en général une boucle de courant de réaction qui fait partie du système de commande en puissance du moteur de commande des mâchoires. Il est ainsi possible de bloquer le moteur et les mâchoires en exerçant une certaine force de serrage avant d'atteindre l'état de consigne, mais cette force dépend du courant de réaction nécessaire pour produire l'équilibre électrique et ne peut donc être réglée.

Le second type d'asservissement consiste à asservir le moteur pour le bloquer, ainsi que les mâchoires, quand une force de serrage choisie par l'utilisateur a été atteinte. L'objet à saisir risque alors d'être violemment heurté par les mâchoires et peut être endommagé.

On se propose ici de cumuler avec un dispositif d'asservissement simple les deux modes d'asservissement décrits et de les employer tour à tour pour ne conserver que leurs avantages. Plus précisément, on utilise le mode d'asservissement en position pour rapprocher les mâchoires de l'objet et le mode d'asservissement en effort lorsque l'objet est saisi. Les chocs et les serrages excessifs sont ainsi évités.

Le système de préhension d'un objet comprend une pince formée de deux mâchoires mutuellement mobiles, un moteur fonctionnant de façon à mouvoir les mâchoires, des moyens de commande du moteur et des moyens d'asservissement, placés entre les moyens de commande et le moteur, stabilisant le moteur et les mâchoires quand l'objet est saisi, dans lequel au moins une des mâchoires est munie de moyens de détection d'un contact mécanique exercé sur les mâchoires par la saisie de l'objet, les moyens d'asservissement sont constitués de moyens d'asservissement des mâchoires en position, de moyens d'asservissement du moteur en effort, ainsi que d'un moyen de commutation pour rendre inopérants les moyens d'asservissement en position lorsque les moyens de détection détectent que l'objet est saisi et pour rendre inopérants les moyens d'asservissement en effort dans le cas contraire.

Ces éléments font partie de l'art antérieur à cette invention et sont mentionnés en particulier dans le brevet britannique 2 166 710. Un système analogue est employé pour la prothèse d'une main humaine et est décrit dans le brevet britannique 2 163 570 : le moyen de commande du moteur est constitué par les influx parcourant deux muscles de l'avant-bras du porteur.

Les dispositifs antérieurs sont toutefois insuffisants en ce qu'ils ne permettent pas de régler l'effort de serrage et ne sont donc pas adaptés à la saisie d'une grande variété d'objets. On utilise tout au plus un capteur de glissement qui commande l'accroissement de l'effort jusqu'à ce que l'objet ne glisse plus dans la pince. Mais dans le cas d'objets fragiles de la vie courante tels que des verres ou des gobelets en plastique, l'effort programmé à l'avance peut briser l'objet. Dans d'autres cas au contraire, on cherche à broyer par la pince un objet à jeter, ce qui implique des efforts bien supérieurs à ceux qui empêchent le glissement. C'est pourquoi on propose ici un système amélioré qui permet de modifier et de régler sans difficulté l'effort de serrage.

Les moyens de commande comprennent pour cela un organe pouvant prendre une position neutre pour laquelle les moyens d'asservissement font évoluer le moteur et les mâchoires vers un état fixe de consigne et deux positions d'évolution pour lesquelles des variations de l'état de consigne sont commandées, et un moyen interprétant la consigne comme une consigne d'effort ou une consigne de position selon que les moyens de détection détectent que l'objet est saisi ou non ; éventuellement, la quantité de variation de l'état de consigne dépend du temps pendant lequel l'organe est mis sur la position d'évolution et les sens de variation de l'état de consigne dépendent de la position d'évolution sur laquelle est mis l'organe.

L'organe peut être un levier pivotant, une manette équivalente ou un autre système tel qu'une paire de boutons. Dans ce dernier cas, la position neutre correspond à deux boutons relâchés et l'intensité des modifications dépend du nombre d'impulsions sur les boutons.

On va maintenant décrire l'invention plus en détail à l'aide des figures suivantes annexées à titre illustratif et nullement limitatif et qui représentent une réalisation de l'invention :
- la figure 1 représente plus spécialement la pince ; et
- la figure 2 illustre les moyens de commande et d'asservissement.

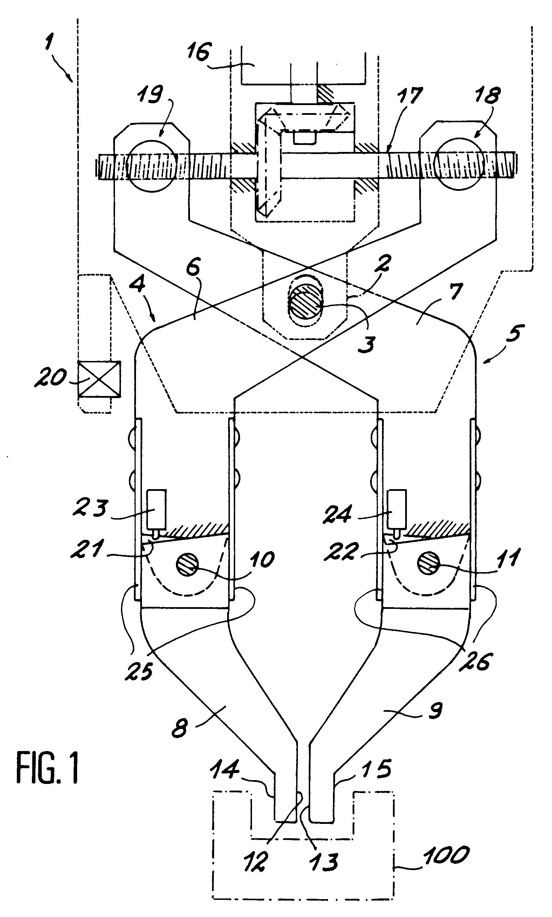

On distingue sur la figure 1 l'extrémité d'un bras de robot 1, terminée par une chape 2 porteuse d'un axe 3 d'articulation, ainsi qu'une pince composée de deux mâchoires 4 et 5. Chacune se compose d'une partie postérieure, 6 et 7 respectivement, articulée autour de l'axe 3 et d'une partie antérieure, 8 et 9 respectivement, articulée autour d'un axe respectif 10 et 11 sur la partie postérieure 6 ou 7 associée. Les parties antérieures 8 et 9 possèdent chacune une paire de surfaces d'appui : deux surfaces d'appui 12 et 13 sont en regard et

2

serrent entre elles des objets convexes alors que les autres surfaces 14 et 15 sont d'orientations opposées et peuvent être introduites dans des alésages d'objets creux 100 pour réaliser des serrages par l'intérieur en écartant les deux mâchoires 4 et 5.

Les déplacements mutuels des mâchoires 4 et 5 sont commandés par un moteur à courant continu 16 lié au bras du robot 1 et qui fait tourner un arbre de sortie 17. Les parties postérieures 6 et 7 comprennent chacune un alésage taraudé 18 et 19 dans lesquels les extrémités, filetées en conséquence, de l'arbre de sortie 17 ont été introduites. Les filetages sont de sens opposés si bien que la rotation de l'arbre de sortie 17 se traduit par des mouvements symétriques des mâchoires 4 et 5. Un capteur optique 20 incrémental, fixé également au bras de robot 1, mesure la distance qui le sépare d'une des mâchoires 4.

Quand aucun objet n'est saisi, il existe un jeu 21, 22 entre les parties antérieures 8, 9 et postérieures 6, 7 des deux mâchoires 4 et 5. Des contacts électriques 23 et 24 de circuits interrupteurs sont disposés devant ces jeux 21 et 22. Des ressorts à lame 25 et 26 maintiennent les jeux 21 et 22. On remarquera que, alors que les mâchoires 4 et 5 sont généralement symétriques, les articulations 10 et 11, les jeux 21 et 22 et les ressorts 25 et 26 sont disposés antisymétriquement, si bien que quand un objet concave 100 est saisi par des mâchoires 4 et 5 qui s'écartent, l'interrupteur formé par les contacts 23 va rester ouvert mais celui qui est constitué par les contacts 24 établis sur la mâchoire 5 va se fermer. Si par contre un objet est saisi par des mâchoires se rapprochant, seul l'interrupteur constitué par les contacts 23 établis sur la première mâchoire 4 se ferme. Pour des pinces qui ne présenteraient pas cette double faculté de saisie, un seul interrupteur serait suffisant.

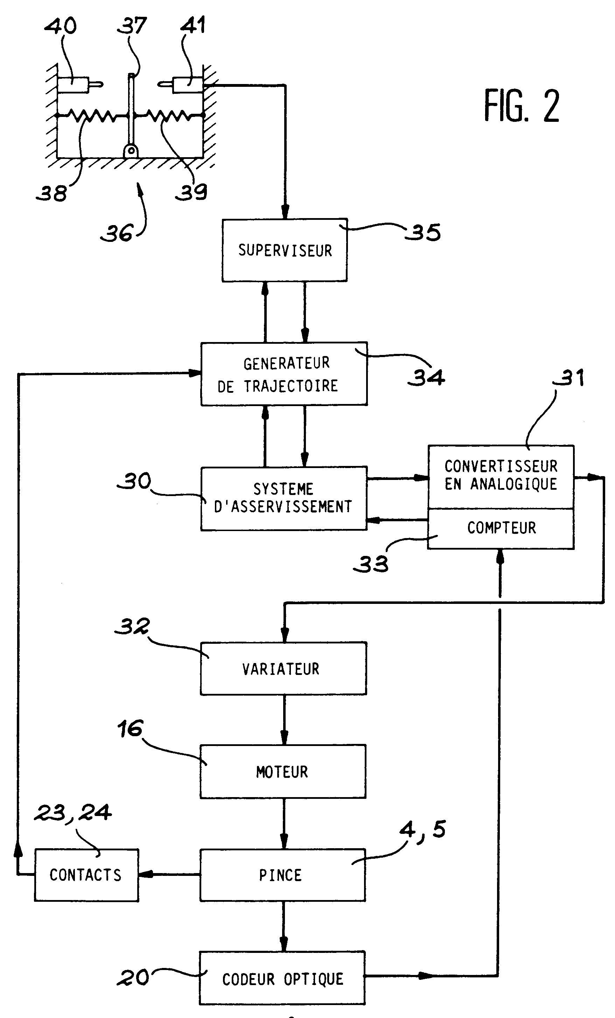

La figure 2 schématise le système de commande utilisé. Un système d'asservissement 30 comprend essentiellement un logiciel qui envoie à un convertisseur numérique-analogique 31 un signal représentatif de l'effort demandé lors de l'asservissement en effort ou de l'écart entre la position d'ouverture actuelle et la position d'ouverture de consigne de la pince lors de l'asservissement en position. Le convertisseur numérique-analogique 31 alimente un variateur de courant 32 en un courant proportionnel à la valeur du paramètre d'asservissement. Le variateur de courant 32 comprend une boucle d'asservissement locale et un amplificateur et fournit au moteur 16 un courant continu tout en limitant le courant maximal délivré au moteur.

La rotation de l'arbre de sortie 17 qui s'ensuit modifie l'ouverture des mâchoires 4 et 5 de la pince. le codeur optique 20 suit les mouvements d'une des mâchoires 4 ; pendant l'asservissement en position, il est actif et envoie des impulsions correspondant à l'importance des déplacements de la mâchoire 4 à un compteur 33 qui indique au système d'asservissement 30 l'état d'ouverture des mâchoires 4 et 5 et lui permet donc de modifier son signal de sortie.

Lorsqu'un objet est saisi, un des contacts 23 ou 24 se ferme. Un générateur de trajectoire 34 reçoit cette information et envoie au système d'asservissement 30 des consignes de courant différentes. Le compteur 33 continue à fournir au système d'asservissement 30 l'indication de la position d'ouverture actuelle de la pince, qui sera de nouveau utile lorsque l'objet sera relâché et l'asservissement en position recommencera.

Un logiciel superviseur 35 commande le générateur de trajectoire 34. Il reçoit des signaux représentatifs de l'état d'un système de commande 36 composé essentiellement d'un levier 37 basculant et pressé par deux ressorts de rappel antagonistes 38 et 39 vers une position médiane. Deux capteurs de déplacement 40 et 41 ont une extrémité sensible atteinte par le levier 37. Quand celui-ci est basculé dans un sens, par exemple vers la gauche sur la figure 2, une information de signe positif est émise par le capteur 40 vers le logiciel superviseur 35. Il s'agit d'une information de modification de consigne d'asservissement correspondant à un mouvement de fermeture de la pince. La modification est proportionnelle à la durée du basculement. Réciproquement, des basculements du levier 37 dans l'autre sens produisent au moyen de l'autre capteur 41 des informations de signe négatif ayant les mêmes conséquences, mais qui correspondent à un mouvement d'ouverture de la pince. Le levier 37 demeure à sa position médiane quand il est relâché par l'utilisateur, et la consigne d'asservissement n'est alors pas modifiée. Les mâchoires restent immobiles ou achèvent leur mouvement vers la consigne d'asservissement fixe si elles ne l'ont pas encore atteinte.

Le générateur de trajectoire 34 exerce une action de commutation car il interprète la modification de consigne d'asservissement demandée d'après l'état des contacts 23 et 24 : si aucun objet n'est serré, la modification correspond à une modification de position d'ouverture de la pince à vitesse constante ; dans le cas contraire, elle correspond à une modification d'effort de serrage également à vitesse constante. Cette décision est transmise en même temps que l'importance de la modification demandée au système d'asservissement 30 qui les exploite comme on l'a vu plus haut.

Le Tableau I récapitule les cas d'asservissement envisageables.

## TABLEAU I

| Contact avec un objet convexe par les surfaces d'appui 12 et 13 | Contact avec un objet concave 100 par les surfaces d'appui 14 et 15 | Signe de l'information émise par le système de commande 36 | Evolution de la position des mâchoires 4 et 5 | Evolution de l'effort de serrage |
|---|---|---|---|---|
| Non | Non | 0 | Nulle | Effort nul |
| Non | Non | + | Fermeture | Effort nul |
| Non | Non | − | Ouverture | Effort nul |
| Oui | Non | 0 | Nulle | Effort constant |
| Oui | Non | + | Nulle | Augmentation |
| Oui | Non | − | Nulle | Diminution |
| Non | Oui | 0 | Nulle | Effort constant |
| Non | Oui | + | Nulle | Diminution |
| Non | Oui | − | Nulle | Augmentation |

Outre les avantages évoqués à la suite de la discussion sur l'art antérieur, la réalisation décrite présente

EP 0 402 229 B1

l'intérêt de permettre de refermer progressivement les mâchoires 4 et 5 sur l'objet par des actions successives de courte durée sur le levier 37. La préhension de l'objet peut donc être rendue plus douce encore. Par ailleurs, les parties antérieures 8 et 9 des mâchoires 4 et 5 peuvent être remplacées facilement en fonction de l'objet à saisir, éventuellement par simple extraction dans le sens des axes 10 et 11. Elles ne comportent en effet aucun capteur ou équipement électrique qui nécessiterait une nouvelle calibration du système.

L'invention peut avantageusement être utilisée par des handicapés pour saisir des objets délicats et fragiles de la vie courante tels que des verres. La commande par levier basculant 37 est bien adaptée à ces utilisateurs et peut d'ailleurs être adoptée pour le pilotage des autres degrés de liberté du robot.

Il est clair que de nombreux moyens de mise en oeuvre de l'invention équivalents sont possibles sans sortir de son cadre. Les systèmes d'asservissement en effort et en position sont très nombreux, de même que les modes de commande. On peut utiliser des capteurs de déplacement variés, de même que l'on pourrait remplacer les contacts 23 et 24 par d'autres dispositifs de mesure d'effort tels que, par exemple, des jauges de contraintes collées sur les mâchoires 4 et 5.

## Revendications

1. Système de préhension d'un objet comprenant une pince formée de deux mâchoires (4, 5) mutuellement mobiles, un moteur (16) fonctionnant de façon à mouvoir les mâchoires (4, 5), des moyens de commande (37) du moteur et des moyens d'asservissement (30, 31, 34), placés entre les moyens de commande et le moteur, stabilisant le moteur et les mâchoires quand l'objet est saisi, et dans lequel au moins une des mâchoires est munie de moyens de détection (23, 24) d'un contact mécanique exercé sur les mâchoires par la saisie de l'objet, les moyens d'asservissement sont constitués de moyens d'asservissement des mâchoires en position (30, 31), de moyens d'asservissement du moteur en effort (30, 31), ainsi que d'un moyen de commutation (34) pour rendre inopérants les moyens d'asservissement en position lorsque les moyens de détection (23, 24) détectent que l'objet est saisi et pour rendre inopérants les moyens d'asservissement en effort dans le cas contraire, caractérisé en ce que les moyens de commande comprennent un organe (37) pouvant prendre une position neutre correspondant à un état fixe de consigne et deux positions d'évolution pour lesquelles des variations de l'état de consigne sont commandées, et un moyen (34) interprétant la consigne comme une consigne d'effort ou une consigne de position selon que les moyens de détection détectent que l'objet est saisi ou non.

2. Système de préhension d'un objet suivant la revendication 1, caractérisé en ce que la quantité de variation de l'état de consigne dépend du temps pendant lequel l'organe est mis sur la position d'évolution et les sens de variation de l'état de consigne dépendent de la position d'évolution sur laquelle l'organe est mis.

3. Système de préhension d'un objet suivant l'une quelconque des revendications 1 ou 2, dans lequel les mâchoires comprennent des surfaces de saisie de l'objet en regard (12, 13) et des surfaces de saisie de l'objet opposées (14, 15), caractérisé en ce que les moyens de détection sont au nombre de deux et effectuent des détections pour les objets en appui respectivement sur les surfaces en regard et les surfaces opposées.

4. Système de préhension d'un objet suivant l'une quelconque des revendications 1 à 3, caractérisé en ce qu'au moins l'une des deux mâchoires (4, 5) composant la pince est formée de deux parties articulées entre elles (8, 9) et maintenues à une position par des ressorts (26), les moyens de détection comprenant un contact électrique fixé à l'une des parties et fermé par contact avec l'autre partie.

## Claims

1. System for gripping an object, comprising a gripper formed of two mutually movable jaws (4, 5) a motor (16) operating so as to move the jaws (4, 5), means (37) for controlling the motor and automatic-control means (30, 31, 34) placed between the control means and the motor, stabilizing the motor and the jaws when the object is grasped, and in which at least one of the jaws is provided with means (23, 24) for detecting a mechanical contact exerted on the jaws by the grasping of the object, the automatic-control means consist of means (30, 31) for automatically controlling the jaws in position, of means (30, 31) for automatically controlling the motor in load, as well as a switchover means (34) for making the means for automatically controlling the position inoperative when the detection means (23, 24) detect that the object has been grasped and for making the means for automatic control in load inoperative in the contrary case, characterized in that the control means comprise a member (37) capable of assuming a neutral position corresponding to a fixed reference state and two evolution positions for which variations in the reference state are controlled, and a means (34) interpreting the reference as a load reference or as a position reference depending on whether the detection means detect that the object has been grasped or not.

2. System for gripping an object according to Claim 1, characterized in that the quantity of variation of the reference state depends on the time during which the member is put in the evolution position and on the directions of variation of the reference state depending on the position of evolution in which the member is placed.

3. System for gripping an object according to either one of Claims 1 and 2, in which the jaws comprise surfaces (12, 13) for grasping the facing object, and opposite surfaces (14, 15) for grasping the object, characterized in that the detection means are two in number and carry out detections for the objects bearing respectively on the facing surfaces and the opposite surfaces.

4. System for gripping an object according to any one of Claims 1 to 3, characterized in that at least one of the two jaws (4, 5) composing the gripper is formed of two parts (8, 9) articulated together and held at a position by springs (26), the detection means comprising an electrical contact fixed to one of the parts and closed by contact with the other part.

**Patentansprüche**

1. System zum Greifen eines Gegenstands, umfassend eine Zange, gebildet aus zwei gegenseitig beweglichen Backen (4, 5), einem Motor (16) zum Bewegen der Backen (4, 5), Steuerungseinrichtungen (37) des Motors und Regeleinrichtungen (30, 31, 34), angeordnet zwischen den Steuerungseinrichtungen und dem Motor zur Stabilisierung des Motors und der Backen, wenn der Gegenstand ergriffen ist, und bei dem wenigstens einer der Backen versehen ist mit Überwachungseinrichtungen (23, 24) eines mechanischen Kontakts, ausgeübt auf die Backen durch das Ergreifen des Gegenstands, wobei die Regeleinrichtungen gebildet werden durch Backenposition-Regeleinrichtungen (30, 31), Motorkraft-Regeleinrichtungen (30, 31), sowie eine Kommunikationseinrichtung (34), um die Positionsregeleinrichtungen inoperationell zu machen, wenn die Überwachungseinrichtungen (23, 24) feststellen, daß der Gegenstand ergriffen ist, und um im gegenteiligen Fall die Kraftregeleinrichtungen inoperationell zu machen,
dadurch **gekennzeichnet,**
daß die Steuerungsmittel ein Organ (37) enthalten, das eine Mittelstellung einnehmen kann, einem festen bzw. stationären Einstellgrößenzustand entsprechend, und zwei Schwenkstellungen, durch die Änderungen des Einstellgrößenzustands gesteuert werden, und eine Einrichtung (34), welche die Einstellgröße als eine Krafteinstellgröße oder eine Positionseinstellgröße auslegt, je nach dem, ob die Überwachungseinrichtungen feststellen, daß der Gegenstand ergriffen ist oder nicht.

2. Greifersystem eines Gegenstands nach Anspruch 1, dadurch gekennzeichnet, daß das Ausmaß der Änderung des Einstellgrößenzustands abhängig ist von der Zeitdauer, während der das Organ in die Schwenkstellung gebracht wird, und die Richtungsänderung des Einstellwertzustands abhängig ist von der Schwenkstellung, in die das Organ gebracht wird.

3. Greifersystem eines Gegenstands nach einem der Ansprüche 1 oder 2, bei dem die Backen sich gegenüberstehende Halteflächen (12, 13) des Gegenstands und entgegengesetzte Halteflächen (14, 15) des Gegenstands umfassen, dadurch gekennzeichnet, daß die Überwachungseinrichtungen zwei an der Zahl sind und Überwachungen ausführen für die Gegenstände, gehalten durch die gegenüberstehenden Flächen, beziehungsweise die entgegengesetzten Flächen.

4. Greifersystem eines Gegenstands nach einem der Ansprüche 1 bis 3, dadurch gekennzeichnet, daß wenigstens einer der beiden die Zange bildenden Backen (4, 5) gebildet wird durch zwei zueinander gelenkige Teile (8,9) und in einer Position gehalten wird durch Federn (26), wobei die Überwachungseinrichtungen einen elektrischen Kontakt enthalten, befestigt an einem der Teile und geschlossen durch Berührung mit dem anderen Teil.

FIG. 1

FIG. 2

40    37    41

38    39

36

SUPERVISEUR — 35

GENERATEUR
DE TRAJECTOIRE — 34

31

30 — SYSTEME
D'ASSERVISSEMENT

CONVERTISSEUR
EN ANALOGIQUE

COMPTEUR

33

32 — VARIATEUR

16 — MOTEUR

23,24    4,5

CONTACTS ← PINCE

20 — CODEUR OPTIQUE